# DEMANDE DE BREVET EUROPEEN

(11) **EP 0 972 483 A2**
(43) Date de publication de la demande: **19.01.2000**
(21) Numéro de dépôt: 99121388.5
(22) Date de dépôt: 03.10.1997
(51) Int. Cl.: A47J 43/07

(54) **Appareil electromenager de preparation culinaire, du genre robotmanager multi-usages**

(30) Priorité: 03.10.1996 FR 9612268
(62) Demande divisionnaire de: 97420185.7
(71) Demandeur: SEB S.A., 69132 Ecully (FR)
(72) Inventeur: Martin, Guy, 65290 Louey (FR)

(57) **Abrégé**

L'invention concerne un appareil électroménager de préparation culinaire du genre robot ménager, comportant un récipient (1) de travail, un bloc moteur entraînant par l'intermédiaire d'un axe entraîneur un ensemble de travail rotatif (2) sur lequel est monté un outil de travail (3) disposé dans un plan dont la normale est inclinée par rapport à l'axe de rotation A-A' dudit ensemble de travail (2), le récipient comportant un moyen de maintien de l'ensemble de travail sur son axe de rotation.

Conformément à l'invention, l'outil de travail (3) comporte deux lames (7a, 7b) de longueur inégale, la lame (7a) la plus courte étant plus large que la lame (7b) la plus longue, de manière à équilibrer l'outil de travail.

## Description

La présente invention se rapporte au domaine technique général des appareils électroménagers de préparation culinaire du genre robot ménager multi-usages ou encore mini ou multi-hachoir, pourvus d'un ensemble de travail rotatif dont l'outil est incliné par rapport à l'axe de rotation dudit ensemble de travail.

Dans le cadre de l'invention, il convient d'entendre par les termes ensemble de travail rotatif dont l'outil est incliné tout type d'ensemble de travail comportant un outil disposé dans un plan dont la normale n'est pas confondue avec l'axe de rotation de l'ensemble de travail. Un tel outil peut comporter deux lames sensiblement parallèles, coplanaires ou non. Par le terme appareil électroménager de préparation culinaire, du genre robot ménager multi-usages, il convient d'entendre tous les appareils électriques dont l'ensemble de travail rotatif doit être disposé dans un réceptacle de manière à pouvoir assumer la fonction dévolue à l'outil, et ce indépendamment du type d'outil utilisé. Dès lors, le terme appareil de préparation culinaire revêt, au sens de l'invention un sens large incluant des appareils divers non limités par leur fonction de préparation culinaire qui peut consister à titre d'exemple non limitatif, à hacher, mélanger, broyer, émulsionner, etc...

Il est connu de réaliser des appareils tels que des robots ménagers ou des mini-hachoirs comportant un ensemble de travail rotatif tournant à une vitesse élevée, et dont l'outil de travail est disposé dans un plan dont la normale est inclinée par rapport à l'axe de rotation dudit ensemble de travail. De tels appareils comportent également, disposé dans le fond du récipient de travail, un dispositif de maintien de l'ensemble de travail selon son axe de rotation, tel qu'un insert. Une telle technique est largement répandue dans la plupart des petits appareils ménagers de préparation culinaire.

Le document FR 2 183 321 décrit un appareil électroménager coupeurmélangeur, comportant un récipient de travail ainsi qu'un ensemble de travail rotatif entraîné, par l'intermédiaire d'un axe entraîneur monté dans une cheminée du récipient, par un moteur disposé sous le récipient de travail. L'ensemble de travail comporte deux lames inclinées par rapport à l'axe de rotation. L'ensemble de travail est maintenu par la cheminée.

Le document FR 2 360 285 décrit un appareil électroménager pour broyer des produits alimentaires, comportant un récipient de travail ainsi qu'un ensemble de travail rotatif entraîné par l'intermédiaire d'un axe entraîneur par un bloc moteur disposé sur l'appareil. L'ensemble de travail comporte deux lames montées de manière décalée sur l'axe de rotation, tournant selon deux plans parallèles. L'ensemble de travail est maintenu par un insert métallique disposé dans le fond du récipient de travail.

Les inconvénients de cette solution sont liés à la difficulté de nettoyer la cuve, puisque celle-ci comporte en son fond et en son centre un insert en général métallique s'opposant notamment à un bon nettoyage mais pouvant être également à l'origine d'une prolifération bactérienne. Par ailleurs, la présence d'un insert ou axe métallique empêche l'utilisation des cuves dans des fours classiques ou à micro-ondes, ce qui est souvent perçu comme une contrainte d'utilisation négative par les consommateurs. L'insert affecte l'ergonomie de la cuve et rend difficile le service en nuisant au déplacement des ustensiles au fond de la cuve. Enfin, sur le plan industriel, la mise en place de l'insert métallique constitue une étape supplémentaire dans un procédé de fabrication, menant à un surcoût.

L'objet de l'invention vise à éviter un balourd dû à la différence d'énergie cinétique des deux lames, permettant plus facilement de s'affranchir d'un insert ou d'une cheminée dans le fond du récipient de travail.

Un autre objet de l'invention vise à fournir un appareil électroménager de préparation culinaire de conception générale simplifiée, sans pour autant limiter sa facilité d'utilisation.

Les objets assignés à l'invention sont atteints à l'aide d'un appareil électroménager de préparation culinaire du genre robot ménager, comportant un récipient de travail, un bloc moteur entraînant par l'intermédiaire d'un axe entraîneur un ensemble de travail rotatif sur lequel est monté un outil de travail disposé dans un plan dont la normale est inclinée par rapport à l'axe de rotation A-A' dudit ensemble de travail, le récipient comportant un moyen de maintien de l'ensemble de travail sur son axe de rotation, caractérisé en ce que l'outil de travail comporte deux lames de longueur inégale, la lame la plus courte étant plus large que la lame la plus longue, de manière à équilibrer l'outil de travail.

Cette disposition permet d'éviter d'utiliser un moyen servant à maintenir l'ensemble de travail en rotation autour de son axe qui puisse résister à des efforts importants.

Avantageusement, le récipient de travail présente des parois s'évasant à partir d'un tond. Le récipient de travail présente alors une forme de bol.

Selon un mode de réalisation, l'outil de travail comporte en outre au moins deux masses d'équilibrage, celle disposition supprimant l'essentiel des vibrations habituellement rencontrées dans l'appareil.

Le récipient de travail peut avantageusement être réalisé en verre.

D'autres particularités et avantages ressortiront mieux à la lecture de la description donnée ci-après en référence aux dessins annexés donnés à titre d'exemples illustratifs mais non limitatifs dans lesquels:
- la figure 1 montre selon une coupe longitudinale partielle un exemple de réalisation d'un appareil électroménager de préparation culinaire conforme à l'invention.
- la figure 2 montre selon une vue de dessus partielle un exemple de réalisation d'un appareil électroménager de préparation culinaire conforme à l'invention,
- la figure 3 montre selon une coupe longitudinale partielle un autre exemple de réalisation d'un appareil électroménager de préparation culinaire conforme à l'invention.

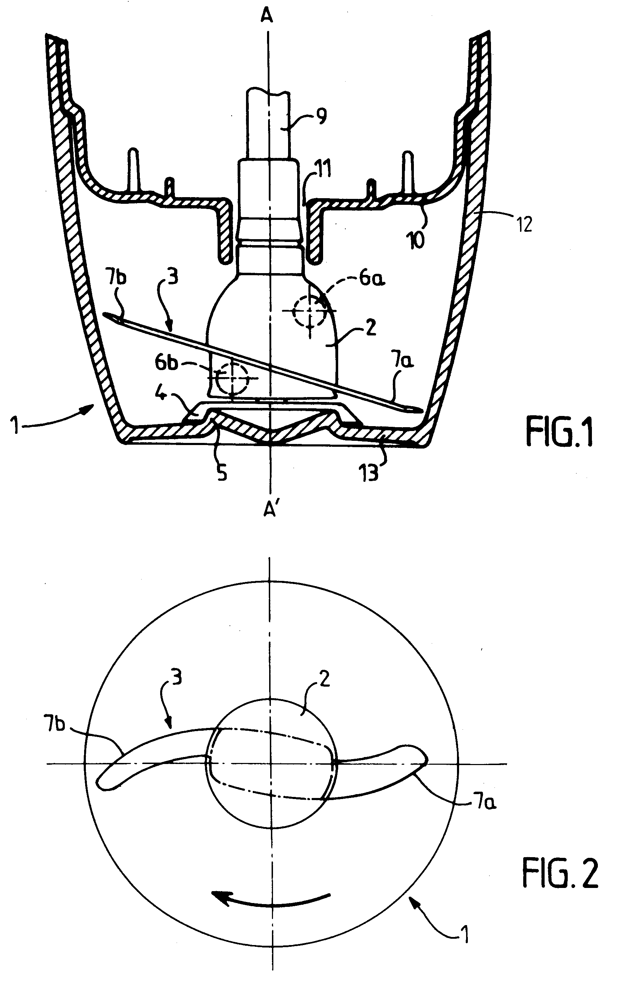

L'appareil électroménager de préparation culinaire conforme à l'invention montré aux figures 1 à 3 comporte un récipient 1 de travail, de toutes formes appropriées, par exemple sensiblement cylindrique, délimité extérieurement pas des parois latérales 12 et un fond 13. Le récipient 1 est réalisé en tous matériaux, et de manière avantageuse, en tout matériau permettant son utilisation dans un four, tels que du verre ou des matériaux céramiques, ou dans un four à micro-ondes, tels que des matériaux à base de polymères, ou encore du verre ou des matériaux céramiques.

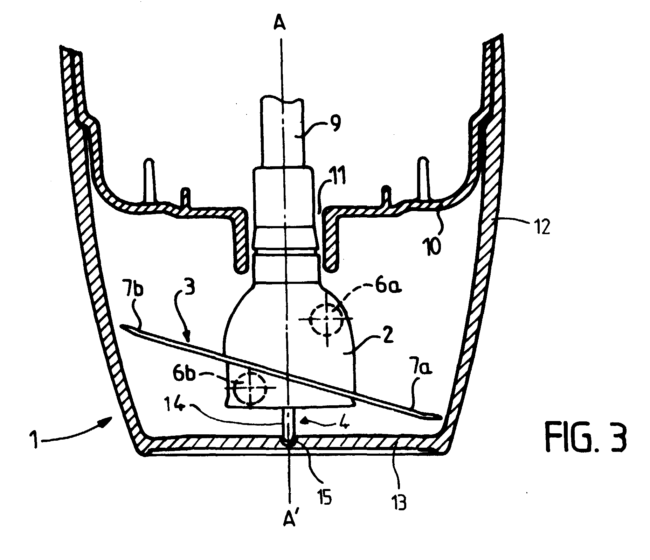

L'appareil comporte également un ensemble de travail rotatif 2, entraîné par un bloc moteur, non représenté aux figures, par l'intermédiaire d'un axe entraîneur 9 avantageusement amovible. Sur l'ensemble de travail 2 est monté un outil de travail 3 disposé avantageusement dans un plan dont la normale est inclinée par rapport à l'axe de rotation A-A' dudit ensemble de travail 2. L'ensemble de travail rotatif 2 comporte une embase 4, avantageusement mobile en rotation autour de l'axe A-A' de rotation de l'ensemble de travail 2, susceptible de s'appuyer sur un relief 5 ou une conformation 15 formé(e) sur le fond du récipient 1. L'exemple de réalisation présenté à la figure 1 comporte une embase 4 mobile en rotation autour de l'axe A-A' de rotation de l'ensemble de travail 2. L'exemple de réalisation présenté à la figure 3 comporte une embase consistant en un axe 14 tourillonnant dans une conformation 15 ménagée sur le fond du récipient 1. L'ensemble de travail 2 comporte au moins deux masses 6a, 6b d'équilibrage, constituées avantageusement par des billes, de préférence métalliques, tel que représenté aux figures 1 et 3. Ainsi l'axe pour lequel se produit une rotation équilibrée de l'ensemble de travail 2 comportant l'outil de travail 3 est confondu avec l'axe de rotation géométrique de l'ensemble de travail 2. Ainsi il n'est plus nécessaire d'utiliser un moyen assurant le maintien axial de l'ensemble de travail de manière ferme au fond du récipient 1, tel que par exemple un insert métallique. De plus cette disposition supprime l'essentiel des vibrations habituellement rencontrées dans un appareil.

De manière avantageuse, l'outil de travail 3 comporte deux lames 7a, 7b de longueur inégale. De manière avantageuse également, le récipient 1 est en forme de bol et présente des parois 12 s'évasant à partir du fond 13, tel que représenté à la figure 1. La lame 7a de l'outil 3 la plus courte est avantageusement plus large que la lame 7b la plus longue, de manière à équilibrer l'outil. Celle disposition permet d'éviter un balourd dû à la différence d'énergie cinétique des deux lames.

Ainsi même dans le cas de l'utilisation d'un outil 3 comportant deux lames de longueur différente il n'est plus nécessaire d'utiliser un moyen servant à maintenir l'ensemble de travail 2 en rotation autour de son axe qui puisse résister à des efforts importants.

Avantageusement, l'embase 4 est mobile en translation selon l'axe A-A'. Cette configuration permet notamment de faciliter le nettoyage de l'ensemble de travail rotatif 2.

De manière avantageuse, l'appareil selon l'invention comporte une coupelle 10 venant en contact annulaire de manière au moins partielle avec le récipient 1 et comportant un orifice 11 prévu pour le passage de la partie supérieure de l'ensemble de travail 2 disposé dans le récipient 1. Ainsi lorsque l'utilisateur retire le bloc moteur de la cuve, l'axe entraîneur 9 lié au bloc moteur se dégage de l'ensemble de travail 2, lequel est maintenu par la coupelle 10. L'ensemble de travail 2 comportant l'outil 3 tourne alors de façon stable sans déséquilibre et est freiné progressivement par l'action des forces de frottement. De plus l'utilisateur ne peut accéder à l'outil 3 avant son arrêt.

Un avantage considérable de la présente invention consiste en l'utilisation d'un récipient 1 ne comportant pas d'insert métallique. Il est alors possible de réaliser le récipient 1 en tout type de matériau, et particulièrement dans un matériau tel que le verre, qui peut notamment passer du congélateur au four, dans sa qualité Pyrex™.

A titre de variante, non représentée aux figures, l'outil de travail 3 comporte au moins deux lames réalisées au moyen de deux pièces distinctes. A titre de variante pouvant être combinée ou non avec la variante précédente, et également non représentée aux figures, les lames formant l'outil de travail 3 sont disposées selon au moins deux plans éventuellement parallèles mais non confondus. Par exemple les lames formant l'outil de travail 3 sont sensiblement parallèles mais fixées axialement de manière décalée l'une par rapport à l'autre sur l'axe A-A' de rotation de l'ensemble de travail 2.

## Revendications

1. Appareil électroménager de préparation culinaire du genre robot ménager, comportant un récipient (1) de travail, un bloc moteur entraînant par l'intermédiaire d'un axe entraîneur (9) un ensemble de travail rotatif (2) sur lequel est monté un outil de travail (3) disposé dans un plan dont la normale est inclinée par rapport à l'axe de rotation A-A' dudit ensemble de travail (2), le récipient comportant un moyen de maintien de l'ensemble de travail sur son axe de rotation, caractérisé en ce que l'outil de travail (3) comporte deux lames (7a, 7b) de longueur inégale, la lame (7a) la plus courte étant plus large que la lame (7b) la plus longue, de manière à équilibrer l'outil de travail.

2. Appareil selon la revendication 1, caractérisé en ce que le récipient (1) de travail présente des parois (12) s'évasant à partir d'un fond (13).

3. Appareil selon l'une des revendications 1 ou 2, caractérisé en ce que l'outil de travail (3) comporte au moins deux masses (6a, 6b) d'équilibrage.

4. Appareil selon l'une des revendications 1 à 3, caractérisé en ce que le récipient (1) de travail est réalisé en verre.
